# EUROPÄISCHE PATENTSCHRIFT

(11) **EP 1 640 112 B1**
(45) Veröffentlichungstag und Bekanntmachung des Hinweises auf die Patenterteilung: **05.11.2008**
(21) Anmeldenummer: 05019621.1
(22) Anmeldetag: 09.09.2005
(51) Int. Cl.: B23Q 1/00, B23Q 5/04

(54) **Mehrachsen-Bearbeitungskopf**
Operating head with several axes
Tête d'usinage à plusieurs axes

(30) Priorität: 27.09.2004 DE 102004047111
(43) Veröffentlichungstag der Anmeldung: 29.03.2006
(73) Patentinhaber: Homag Holzbearbeitungssysteme AG, 72296 Schopfloch (DE)
(72) Erfinder: Sturm, Gotthilf, 72293 Glatten (DE); Gauss, Achim, 72280 Dornstetten/Hallwangen (DE)
(74) Vertreter: HOFFMANN EITLE

(56) Entgegenhaltungen:
- EP-A- 1 092 499
- EP-A- 1 172 175
- US-A- 4 525 918
- US-A- 4 664 588

## Beschreibung

Die Maschine bezieht sich auf einen Mehrachsen-Bearbeitungskopf für eine programmgesteuerte Holzbearbeitungsmaschine mit einem um eine erste Achse drehbaren Spindelgehäuse und einer darin angeordneten Motorspindel, die eine an der freien Stirnseite des Spindelgehäuse liegende Aufnahme für Bearbeitungsaggregate aufweist, und mit Energieversorgungs- und/oder Signalübertragungseinrichtungen für die an der Motorspindel aufgenommenen Bearbeitungsaggregate, wobei an der Stirnseite des Spindelgehäuses eine Schnittstellenebene ausgebildet ist, bis zu der hin Leitungen für die Energie- und/oder Signalübertragung führen, die an Anschlussvorrichtungen angeschlossen sind, die im Bereich der Schnittstellenebene angeordnet sind.

Ein solcher Mehrachsenkopf ist aus dem Dokument EP 0 743 139 A1 bekannt. Es handelt sich hierbei um einen sogenannten 4-Achsenkopf, weil dessen Spindelgehäuse um eine zusätzliche Achse drehbar ist, die zu den drei Achsen der programmgesteuerten Maschine hinzugerechnet wird. So hat eine solche Maschine eine Aufnahme für den Bearbeitungskopf, die in der üblichen X-Y-Ebene und in der senkrecht dazu stehenden Z-Richtung verfahrbar ist.

Der bekannte 4-Achsenkopf weist Energieversorgungs- und Signalübertragungseinrichtungen auf, um Komponenten bestimmter Bearbeitungsaggregate, die in die Aufnahme der Motorspindel eingewechselt werden können, antreiben und steuern zu können. So können derartige Aggregatkomponenten unter anderem mit elektrischer Energie, Druckluft, einem Kühlmittel und/oder Steuersignalen versorgt werden, womit sich der Einsatzbereich der Holzbearbeitungsmaschine erweitern läßt. Die Energieversorgungs- und Signalübertragungseinrichtungen werden bei dem bekannten Bearbeitungskopf durch daran anfügbare Module gebildet, die entsprechend dem jeweiligen Einsatzzweck ausgewählt und konzentrisch um die Spindel herum angeordnet werden. Es können auch zwei dieser Module koaxial hintereinander angeordnet vorgesehen werden, die miteinander verschachtelbar sind. Die zusätzliche Achse, um die das Spindelgehäuse dreh- oder schwenkbar ist, verläuft koaxial mit der Rotationsachse der Motorspindel, womit es lediglich möglich ist, auf die in die Aufnahme der Motorspindel eingewechselten Bearbeitungsaggregate neben dem Drehantrieb durch die Motorspindel eine Dreh- oder Schwenkbewegung zu übertragen, deren Achse mit der Rotationsachse der Motorspindel zusammenfällt.

Wie das Dokument EP 1 092 499 A2 zeigt, sind sogenannte 5-Achsen-Bearbeitungsköpfe bekannt, bei denen das Spindelgehäuse an einem Schwenkkopf schwenkbar gelagert ist und dieser Schwenkkopf einschließlich dem Spindelgehäuse um eine Achse gedreht oder geschwenkt werden kann. Diese Schwenk- oder Drehachse des Spindelkopfes und die Schwenkachse, um die das Spindelgehäuse am Schwenkkopf geschwenkt werden kann, stellen somit zwei zusätzliche Maschinenachsen dar, die in der Programmsteuerung der Holzbearbeitungsmaschine berücksichtigt werden. Derartige 5-Achsen-Köpfe sind bislang ohne eine Energieversorgungs- oder Signalübertragungseinrichtung ausgeführt worden.

Auf einem anderen Gebiet, nämlich dem der Roboterarme, ist es für den Austausch der Manipulationswerkzeuge bekannt, zwischen zwei miteinander mechanisch fest verbindbaren Kupplungsteilen elektrische Steuersignale und pneumatisch Energie übertragen zu können; vergl. US 4,664,588. Aus dem zum Ende des Roboterarms hin anzuordnenden Kupplungsteil sind die Signal- und Energieleitungen wieder herausgeführt, die an den Antrieb des Manipulationswerkzeuges angeschlossen werden. Eine Schnittstelle zur Übertragung von Rotationsenergie ist bei einer solchen Kupplungsvorrichtung nicht möglich.

Der Erfindung liegt die Aufgabe zugrunde, einen Mehrachsen-Bearbeitungskopf der eingangs genannten Art als 5-Achsen-Bearbeitungskopf auszubilden, der eine entsprechend höhere Funktionalität aufweist.

Diese Aufgabe wird durch einen Mehrachsen-Bearbeitungskopf mit den Merkmalen des Patentanspruchs 1 gelöst.

Für die Erfindung ist wesentlich, daß die Schnittstellen für die Energieversorgung und/oder Signalübertragung zu den Werkzeugen, Werkzeugaggregaten oder sonstigen Bearbeitungsaggregaten hin, die an der Motorspindel aufgenommen werden können, unmittelbar an dem schwenkbaren Spindelgehäuse in der Nachbarschaft derjenigen mechanischen Schnittstelle liegen, an der die Werkzeuge oder Bearbeitungsaggregate an der Motorspindel aufgenommen werden. Damit ist ein 5-Achsen-Bearbeitungskopf realisiert, der gegenüber einem 4-Achsen-Bearbeitungskopf die höhere Funktionalität aufweist und die Energieversorgungs- und/oder Signalübertragungseinrichtungen für die aufgenommenen Werkzeug- oder Bearbeitungsaggregate hat, die bislang nur an einem 4-Achsen-Bearbeitungskopf vorgesehen werden konnten.

Die Erfindung wird nachfolgend anhand der Zeichnung an einem Ausführungsbeispiel noch näher erläutert. Dabei zeigen:
- Fig. 1: in perspektivischer Wiedergabe einen 5-Achsen-Bearbeitungskopf und
- Fig. 2: in vergrößerter Darstellung einen Schnitt durch den unteren Bereich des Spindelgehäuses des Bearbeitungskopfes nach Fig. 1 mit daran angesetztem Bearbeitungsaggregat.

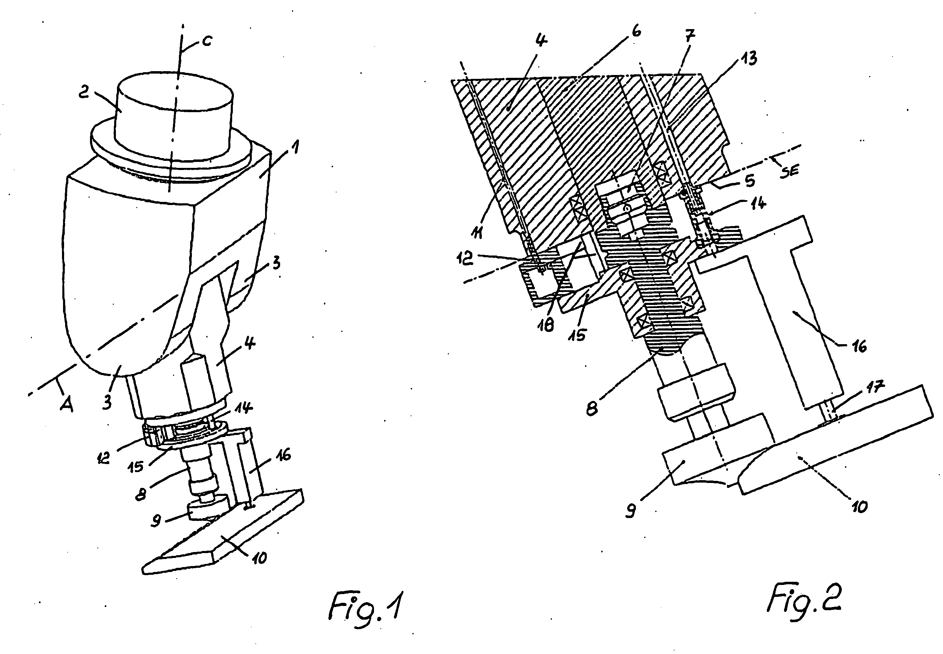

Im einzelnen zeigt Figur 1 den grundsätzlichen Aufbau des 5-Achsen-Bearbeitungskopfes, der für eine programmgesteuerte Holzbearbeitungsmaschine bestimmt ist. Er weist einen Schwenkkopf 1 auf, an dem oberseitig eine Antriebseinheit 2 angeordnet ist. Relativ zu der fest an einem Maschinensupport zu installierenden Antriebseinheit 2 ist der Schwenkkopf 1 um eine erste Achse C mittels der Antriebseinheit 2 schwenkbar.

Unterseitig weist der Schwenkkopf 1 Gabelenden 3 auf, dementsprechend ist er als Gabelkopf ausgebildet.. Zwischen den Gabelenden 3 ist ein Spindelgehäuse 4 aufgenommen, welches um eine zweite Achse A schwenkbar ist, die senkrecht auf der ersten Achse C steht, um die der Schwenkkopf 1 dreh- oder schwenkbar ist. Die Schwenkung des Spindelgehäuses 4 um die Achse A wird ebenfalls programmgesteuert über das Programm der Holzbearbeitungsmaschine vorgenommen. Zusammen mit den drei üblichen Maschinenachsen, der horizontalen X-Achse sowie der horizontalen senkrecht zur X-Achse stehenden Y-Achse und der senkrecht auf der X-Y-Ebene stehenden Z-Achse, in denen der erwähnte Maschinensupport beweglich ist, kann somit mit dem Schwenkkopf 1 eine sogenannte 5-Achsen-Bearbeitung vorgenommen werden. Denn die drei Maschinenachsen werden ergänzt durch die Schwenk- oder Drehachse C für den Schwenkkopf 1 und die Schwenkachse A für das Spindelgehäuse 4.

Grundsätzlich kann der Schwenkkopf 1 auch andere Bauformen aufweisen. So kann der Einsatz eines einseitigen Gabelkopfes mit nur einem Gabelende 3 in Betracht kommen, ebenso kann der Schwenkkopf 1 eine gekröpfte Bauform aufweisen, um eine kardanische Beweglichkeit des Spindelgehäuses 4 zu erzielen. Im letzten Falle verläuft die Schwenkachse A, um die das Spindelgehäuse 4 schwenkbar ist, winklig zur Dreh- oder Schwenkachse C des Schwenkkopfes 1, insbesondere beträgt hierbei der Winkel zwischen den beiden Achsen A und C 45°.

Wie ergänzend Figur 2 zeigt, ist in dem Spindelgehäuse 4 eine Motorspindel 6 gelagert, die eine Werkzeug- bzw. Aggrateaufnahme 7 aufweist, mit der die Spindel 6 geringfügig an der freien Stirnseite 5 des Spindelgehäuses 4 vorsteht. Die senkrecht zur Spindelachse verlaufende Stirnseite 5 des Spindelgehäuses 4 bildet eine Schnittstellenebene SE, an der mehrere Schnittstellen vorgesehen sind, so auch die Aufnahme 7 der Motorspindel 6, die im vorliegenden Fall als HSK (Hohlschaftkegel)-Schnittstelle ausgebildet ist. Darin ist beim Ausführungsbeispiel ein Werkzeugaggregat 8 mit einem rotierenden, spannehmenden Werkzeug 9, wie ein Fräser, aufgenommen, der zur Kantenbearbeitung eines schematisch dargestellten Werkstücks 10 dient.

Zu der Schnittstellenebene SE an der Stirnseite 5 des Spindelgehäuses 4 sind Leitungen 11 und 13 hingeführt, bei denen es sich um elektrische und/oder optische Leitungen und/oder um Leitungen für den Transport gasförmiger und/oder flüssiger Medien handelt. In vorteilhafter Ausführung sind die Leitungen 11 und 13 durch das Spindelgehäuse 4 hindurch bis zur Schnittstellenebene SE geführt.

Beim Ausführungsbeispiel ist die Leitung 11 eine elektrische Leitung, über die elektrische Energie und/oder elektrische Signale übertragen werden. Im Bereich der Schnittstellenebene SE ist dazu eine Schnittstelle in Gestalt einer Anschlußvorrichtung 12 vorhanden, bei der es sich in Anpassung an die als elektrische Leitung ausgebildete Leitung 11 um einen Steckkontakt handelt. In anderer Ausführung kann die Leitung 11 als Lichtwellenleiter ausgeführt sein, um darüber optische Signale oder optische Energie bis in den Bereich der Schnittstellenebene SE zu leiten, die über die entsprechend angepaßte Anschlußvorrichtung 12 an einen Verbraucher oder ein Steuergerät angekoppelt werden kann.

Weiter ist durch das Spindelgehäuse 4 eine Leitung 13 achsparallel zur Motorspindel 6 hindurchgeführt, die rohrförmig ausgebildet ist und beispielhaft als Pneumatikleitung dient. Der Anschluß daran im Bereich der Schnittstellenebene SE geschieht mittels einer weiteren Anschlußvorrichtung 14, die mit entsprechenden Dichtungen und/oder Ventilen ausgestattet ist. In gleicher Weise kann auch ein Fluid bis hin zur Schnittstellenebene SE transportiert werden.

Benötigt wird die Energie- und/oder Signalversorgung entweder für das Werkzeugaggregat 8 selbst oder für ein Zusatzaggregat 16, mit dem besondere Funktionen, wie hier die Abtastung der Oberseite des Werkstücks 10 vorgenommen werden können. In diesem Fall hat das Zusatzaggregat 16 einen pneumatisch beaufschlagten Taster 17, der versorgt über die Leitung 11 ein elektrisches Steuersignal bildet, um entsprechend einem etwa welligen Verlauf im Randbereich der Oberseite des Werkstücks 10 das Werkzeug 9 für die Bearbeitung der Werkstückkante nachführen zu können.

Auf dem Werkzeugaggregat 8 ist ein radial vorstehender Montagering 15 gelagert, der mittels einer Drehmomentenstütze 18 mit dem Spindelgehäuse 4 verbunden ist. An dem Montagering 15 ist das Zusatzaggregat 16 befestigt, zudem ist die elektrische und pneumatische Verbindung des Zusatzaggregates 16 mit den Anschlußvorrichtungen 12 und 14 über den Montagering 16 hergestellt, um das Zusatzaggregat 16 mit Energie zu versorgen und mit der Maschinensteuerung elektrisch zu verbinden.

Bei dem Zusatzaggregat 16 kann es sich abweichend von dem dargestellten Beispiel anderweitig um ein aktives Bauteil handeln, welches einen eigenen Hilfsantrieb, wie einen Dreh- oder Schwenkantrieb aufweist. Damit kann das an der Motorspindel 6 aufgenommene Bearbeitungsaggregat 8 mit weiteren Funktionen versehen sein, die über den Hilfsantrieb gesteuert oder angetrieben werden. In diesem Fall erhält man eine zusätzliche Ausbaustufe des Mehrachsen-Bearbeitungskopfes, der somit als 6-Achsen-Bearbeitungskopf zu bezeichnen ist.

Der 6-Achsen-Bearbeitungskopf kann noch in anderer Weise verwirklicht werden. In diesem Fall wird das Spin-delgehäuse 4 in einen Antriebsteil und in einen davon drehend angetriebenen Endteil gegliedert. Der Antriebsteil ist in der oben beschriebenen Weise am Schwenkkopf 1 um die Achse A schwenkbar gelagert. An der freien Stirnseite des Endteils befindet sich die Schnittstellenebene SE, in deren Bereich am drehbaren Endabschnitt des Spindelgehäuses 4 zumindest eine Mitnehmervorrichtung angeordnet ist, um das mit der Motorspindel 6 verbundene Bearbeitungsaggregat, welches zum einen den Drehantrieb über die Motorspindel 6 benötigt, zum anderen um die Rotationsachse der Motorspindel drehen oder schwenken zu können.

## Patentansprüche

1. Mehrachsen-Bearbeitungskopf für eine programmgesteuerte Holzbearbeitungsmaschine, mit einem um eine erste Achse (C) drehbaren Spindelgehäuse (4) und einer darin angeordneten Motorspindel (6), die eine an der freien Stirnseite des Spindelgehäuse (4) liegende Aufnahme (7) für Bearbeitungswerkzeuge und -aggregate (8) aufweist, und mit Energieversorgungs- und/oder Signalübertragungseinrichtungen für die an der Motorspindel (6) aufgenommenen Bearbeitungswerkzeuge oder -aggregate, wobei an der Stirnseite (5) des Spindelgehäuses (4) eine Schnittstellenebene (SE ausgebildet ist, bis zu der hin Leitungen (11, 13) für die Energie- und/oder Signalübertragung führen, die an Anschlussvorrichtungen (12, 14) angeschlossen sind, die im Bereich der Schnittstellenebene (SE) angeordnet sind, wobei
das Spindelgehäuse (4) direkt an einem Schwenkkopf (1) angeordnet ist, der einschließlich des Spindelgehäuses (4) um die erste Achse (C) drehbar ist, wobei das Spindelgehäuse (4) am Schwenkkopf (1) um eine zweite Achse (A) schwenkbar angeordnet ist, die winklig zu der ersten Achse (C) steht.

2. Mehrachsen-Bearbeitungskopf nach Anspruch 1,
**dadurch gekennzeichnet,**
**daß** zumindest eine der zur Schnittstellenebene (SE) des Spindelgehäuses (4) am Schwenkkopf (1) führenden Leitungen (11, 13) eine elektrische Leitung und die hierfür durch die betreffende Anschlußvorrichtung (12, 14) gebildete Schnittstelle ein Steckkontakt ist.

3. Mehrachsen-Bearbeitungskopf nach Anspruch 1 oder 2,
**dadurch gekennzeichnet,**
**daß** zumindest eine der zur Schnittstellenebene (SE) des Spindelgehäuses (4) am Schwenkkopf (1) führenden Leitungen (11, 13) eine optische Leitung in Gestalt eines Lichtwellenleiters und die hierfür durch die betreffende An-schlußvorrichtung (12, 14) gebildete Schnittstelle ein Optokoppler ist.

4. Mehrachsen-Bearbeitungskopf nach einem der Ansprüche 1
**dadurch gekennzeichnet,**
**daß** zumindest eine der zur Schnittstellenebene (SE) des Spindelgehäuses (4) am Schwenkkopf (1) führenden Leitungen (11, 13) eine rohr- oder schlauchförmige Leitung ist, durch die hindurch ein gasförmiges oder flüssiges Medium hindurchgeleitet ist, wobei die durch die betreffende Anschlußvorrichtung (12, 14) gebildete Schnittstelle ein Gas- oder Fluidanschluß ist.

5. Mehrachsen-Bearbeitungskopf nach einem der Ansprüche 1 - 4,
**dadurch gekennzeichnet,**
**daß** die bis zur Schnittstellenebene (SE) des Spindelgehäuses (4) am Schwenkkopf (1) führenden Leitungen (11, 13) für die Energie- und/oder Signalübertragung durch das Spindelgehäuse (4) hindurchgeführt sind.

6. Mehrachsen-Bearbeitungskopf nach einem der Ansprüche 1 - 5,
**dadurch gekennzeichnet,**
**daß** die zweite Achse (A), um die das Spindelgehäuse (4) am Schwenkkopf (1) schwenkbar ist, zu der ersten Achse (C), um die der Schwenkkopf (1) drehbar ist, senkrecht steht.

7. Mehrachsen-Bearbeitungskopf nach einem der Ansprüche 1 - 6,
**dadurch gekennzeichnet,**
**daß** der drehbare Schwenkkopf (1), an der das Spindelgehäuse (4) schwenkbar angeordnet ist, als Gabelkopf ausgebildet ist.

## Claims

1. Multi-axis processing head for a program-controlled woodworking machine, having a spindle housing (4) rotatable about a first axis (C) and a motor spindle (6) which is arranged therein and which has a receptacle for processing tools and units (8) located at the free end face of the spindle housing (4), and having energy supply and/or signal transmission means for the processing tools or units held on the motor spindle (6), at the end face (5) of the spindle housing (4) being formed an interface plane (SE) to which lead wires or pipes (11, 13) for energy and/or signal transmission, which are connected to connection devices (12, 14) which are arranged in the region of the interface plane (SE), the spindle housing (4) being arranged directly on a swivel head (1) which including the spindle housing (4) is rotatable about the first axis (C), the spindle housing (4) being arranged on the swivel head (1) so as to be pivotable about a second axis (A) which is at an angle to the first axis (C).

2. Multi-axis processing head according to claim 1, **characterised in that** at least one of the wires or pipes (11, 13) leading to the interface plane (SE) of the spindle housing (4) on the swivel head (1) is an electrical wire, and the interface formed therefor by the connection device concerned (12, 14) is a plug-in contact.

3. Multi-axis processing head according to claim 1 or 2, **characterised in that** at least one of the wires or pipes (11, 13) leading to the interface plane (SE) of the spindle housing (4) on the swivel head (1) is an optical cable in the form of an optical fibre and the interface formed therefor by the connection device concerned (12, 14) is an optocoupler.

4. Multi-axis processing head according to any of claims 1 - 3, **characterised in that** at least one of the wires or pipes (11, 13) leading to the interface plane (SE) of the spindle housing (4) on the swivel head (1) is a tubular or hose-like pipe through which is conducted a gaseous or liquid medium, the interface formed by the connection device concerned (12, 14) being a gas or fluid connection.

5. Multi-axis processing head according to any of claims 1 - 4, **characterised in that** the wires or pipes (11, 13) for energy and/or signal transmission leading to the interface plane (SE) of the spindle housing (4) on the swivel head (1) are passed through the spindle housing (4).

6. Multi-axis processing head according to any of claims 1 - 5, **characterised in that** the second axis (A) about which the spindle housing (4) is pivotable on the swivel head (1) is perpendicular to the first axis (C) about which the swivel head (1) is rotatable.

7. Multi-axis processing head according to any of claims 1 - 6, **characterised in that** the rotatable swivel head (1) on which the spindle housing (4) is mounted pivotably is designed as a fork head.

## Revendications

1. Tête d'usinage à plusieurs axes, pour une machine d'usinage du bois à commande programmée, avec un boîtier de broche (4) susceptible de tourner autour d'un premier axe (C) et avec une broche à moteur (6) y étant disposée, présentant un logement (7) situé sur l'extrémité frontale libre du boîtier de broche (4), pour des outils et des agrégats d'usinage (8), et avec des dispositifs d'alimentation en énergie et/ou de transmission de signaux, pour les outils ou agrégats d'usinage logés sur la broche à moteur (6), sur la face frontale (5) du boîtier de broche (4) étant réalisé un plan d'interface (SE), jusqu'auquel mènent des lignes (11, 13) pour la transmission d'énergie ou de signaux, raccordées à des dispositifs de raccordement (12, 14) disposés dans la zone du plan d'interface (SE), où
le boîtier de broche (4) est disposé directement sur une tête pivotante (1), susceptible de tourner, y compris le boîtier de broche (4), autour du premier axe (C), le boîtier de broche (4) étant disposé sur la tête pivotante (1) de façon à pouvoir pivoter autour d'un deuxième axe (A), orienté sous un certain angle par rapport au premier axe (C).

2. Tête d'usinage à plusieurs axes selon la revendication 1,
**caractérisée en ce qu'**
au moins l'une des lignes (11, 13) menant au plan d'interface (SE) du boîtier de broche (4), sur la tête pivotante (1), est une ligne électrique et l'interface, formée pour cela par le dispositif de raccordement (12, 14) concerné, est un contact à embrochage.

3. Tête d'usinage à plusieurs axes selon la revendication 1 ou 2,
**caractérisée en ce qu'**
au moins l'une des lignes (11, 13) menant au plan d'interface (SE) du boîtier de broche (4), sur la tête pivotante (1), est une ligne optique ayant la forme d'un guide d'ondes lumineuses, et l'interface, formée pour cela par le dispositif de raccordement (12, 14) concerné, est un coupleur optique.

4. Tête d'usinage à plusieurs axes selon l'une des revendications 1 à 3,
**caractérisée en ce qu'**
au moins l'une des lignes (11, 13) menant au plan d'interface (SE) du boîtier de broche (4), sur la tête pivotante (1), est une ligne en forme de tube ou de tuyau souple, à travers laquelle est guidé un fluide gazeux ou liquide, l'interface, formée par le dispositif de raccordement (12, 14) concerné, étant un raccordement pour gaz ou fluide.

5. Tête d'usinage à plusieurs axes selon l'une des revendications 1 à 4,
**caractérisée en ce qu'**
les lignes (11, 13) menant au plan d'interface (SE) du boîtier de broche (4), sur la tête pivotante (1), pour la transmission d'énergie et/ou de signaux, sont passées à travers le boîtier de broche (4).

6. Tête d'usinage à plusieurs axes selon l'une des revendications 1 à 5,
**caractérisée en ce que** le deuxième axe (A), autour duquel le boîtier de broche (4) est susceptible de pivoter sur la tête pivotante (1), est perpendiculaire au premier axe (C), autour duquel la tête pivotante (1) est susceptible de tourner.

7. Tête d'usinage à plusieurs axes selon l'une des revendications 1 à 6,
**caractérisée en ce que**
la tête pivotante (1), susceptible de tourner, sur laquelle le boîtier de broche (4) est susceptible de pivoter, est réalisée sous forme de tête fourchue.
